# DEMANDE DE BREVET EUROPEEN

(11) **EP 4 555 869 A2**
(43) Date de publication de la demande: **21.05.2025**
(21) Numéro de dépôt: 25167845.4
(22) Date de dépôt: 13.12.2021
(51) Int. Cl.: A23L 7/113

(54) **PROCEDE ET INSTALLATION DE FABRICATION D'UN PRODUIT ALIMENTAIRE SOUS FORME DE BOULETTES, BOUDINS ET / OU PALETS**

(30) Priorité: 18.12.2020 FR 2013704
(62) Demande divisionnaire de: 21848177.8
(71) Demandeur: Desvilettes, Martine Marcelle Gérarde, 69008 Lyon (FR)
(72) Inventeur:
(74) Mandataire: Cabinet Didier Martin

(57) **Abrégé**

- Procédé et installation de fabrication d'un produit alimentaire sous forme de boulettes, boudins et / ou palets
- L'invention concerne un procédé de fabrication d'un produit alimentaire sous forme de boulettes, boudins et / ou palets (B), destiné à être poêlé avant d'être consommé, comprenant :
- une étape de malaxage et de cuisson simultanés d'un mélange formé à partir d'un ou plusieurs ingrédients de base et d'un liquide pour obtenir une composition pâteuse (C),
- une étape de formage de boulettes, boudins et / ou palets à partir de la composition pâteuse, comprenant une opération de recouvrement d'au moins une partie d'une surface extérieure des boulettes, boudins et / ou palets par une farine d'enrobage (F), puis
- une étape d'élimination de la farine d'enrobage présente sur ladite surface extérieure des boulettes, boudins et / ou palets.

- Procédés et installations de fabrication de produits alimentaires

## Description

### DOMAINE TECHNIQUE

La présente invention se rapporte au domaine technique général des procédés et installations de fabrication de produits alimentaires sous forme de boulettes, de boudins et / ou encore de palets destinés à être réchauffés ou cuits en vue de leur consommation.

La présente invention concerne en particulier un nouveau procédé et une nouvelle installation de fabrication d'un tel produit alimentaire, et plus spécifiquement d'un produit alimentaire destiné à être poêlé avant sa consommation.

### TECHNIQUE ANTERIEURE

On connaît déjà une grande variété de produits alimentaires, typiquement vendus en rayons frais de supermarchés, et qui se présentent sous la forme de boulettes, de boudins ou encore de palets fabriqués par mise en forme d'une composition plus ou moins pâteuse, le plus souvent à base de céréales, et parfois également de légumes et / ou de légumineuses. On retrouve par exemple parmi de tels produits alimentaires, des pâtes alimentaires, parfois farcies, tels des ravioles, des tortellinis, etc.

De manière connue de longue date, un grand nombre de ces produits alimentaires est spécifiquement formulé pour être cuit, ou à tout le moins réchauffé, avant consommation par un utilisateur final, par immersion totale d'une dose choisie du produit alimentaire dans une grande quantité d'eau chaude ou bouillante. Un tel mode de préparation peut parfois s'avérer long et fastidieux, et le produit alimentaire ainsi obtenu n'est pas toujours pleinement satisfaisant du point de vue organoleptique. C'est la raison pour laquelle il est proposé sur le marché depuis quelques années, de nouveaux produits alimentaires qui sont, cette fois, destinés à être préparés à la poêle avant leur consommation. De tels produit alimentaires présentent l'intérêt de pouvoir être cuits ou réchauffés de manière aisée et rapide, en particulier par des consommateurs dépourvus de compétences culinaires particulières, typiquement à feu vif à l'aide d'une simple poêle ou sauteuse et d'une petite quantité d'un corps gras. Cependant, les procédés de fabrication de tels produits alimentaires dits « à poêler » sont parfois complexes à mettre à œuvre et ne permettent pas toujours l'obtention d'un produit alimentaire dont les propriétés organoleptiques, tant avant qu'après cuisson ou réchauffage, sont optimales du point de vue du consommateur.

Les objets assignés à l'invention visent par conséquent à apporter une réponse aux besoins et problématiques susvisés, et à proposer ainsi un nouveau procédé et une nouvelle installation améliorés de fabrication d'un produit alimentaire sous forme de boulettes, de boudins ou encore de palets, qui puisse être simplement et rapidement cuit ou réchauffé à la poêle tout en présentant des propriétés organoleptiques améliorées, tant avant qu'après cuisson ou réchauffage.

Un autre objet de l'invention vise à proposer un nouveau procédé et une nouvelle installation de fabrication d'un tel produit alimentaire, qui sont de conception et de mise en œuvre relativement simples.

Un autre objet de l'invention vise à proposer un nouveau procédé et une nouvelle installation qui permettent la fabrication d'un tel produit alimentaire à cadence élevée, en particulier dans un contexte industriel.

Un autre objet de l'invention vise à proposer un nouveau procédé et une nouvelle installation qui permettent la fabrication d'un tel produit alimentaire à coûts maîtrisés.

Un autre objet de l'invention vise à proposer un nouveau procédé et une nouvelle installation qui permettent la fabrication d'un tel produit alimentaire, qui conserve longtemps d'excellentes qualités tant organoleptiques que bactériologiques avant sa cuisson ou son réchauffage.

Un autre objet de l'invention vise à proposer un nouveau procédé de fabrication d'un tel produit alimentaire, dont la mise en œuvre est particulièrement propre, et sûre sur le plan sanitaire.

Un autre objet de l'invention vise à proposer une nouvelle installation de fabrication d'un tel produit alimentaire, dont l'encombrement est particulièrement bien maitrisé.

Les objets assignés à l'invention sont atteints à l'aide d'un procédé de fabrication d'un produit alimentaire sous forme de boulettes, boudins et / ou palets, destiné à être poêlé avant d'être consommé, comprenant :
- une étape de malaxage et de cuisson simultanés d'un mélange formé à partir d'un ou plusieurs ingrédients de base dudit produit alimentaire et d'un liquide pour obtenir une composition pâteuse,
- une étape de formage de boulettes, boudins et / ou palets à partir de ladite composition pâteuse, ladite étape de formage comprenant une opération de recouvrement d'au moins une partie d'une surface extérieure desdits boulettes, boudins et / ou palets par une farine d'enrobage, puis
- une étape d'élimination de tout ou partie de ladite farine d'enrobage présente sur ladite surface extérieure desdits boulettes, boudins et / ou palets.

Les objets assignés à l'invention sont également atteints à l'aide d'une installation de fabrication d'un produit alimentaire sous forme de boulettes, boudins et / ou palets, destiné à être poêlé avant d'être consommé, comprenant :
- un poste de malaxage et de cuisson simultanés d'un mélange formé à partir d'un ou plusieurs ingrédients de base dudit produit alimentaire et d'un liquide pour obtenir une composition pâteuse,
- un poste de formage de boulettes, boudins et / ou palets à partir de ladite composition pâteuse, ledit poste de formage comprenant un dispositif de recouvrement d'au moins une partie d'une surface extérieure desdits boulettes, boudins et / ou palets par une farine d'enrobage, et
- un système d'élimination de tout ou partie de ladite farine d'enrobage présente sur ladite surface extérieure desdits boulettes, boudins et / ou palets.

### DESCRIPTIF SOMMAIRE DES DESSINS

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :
- la figure 1 illustre, de manière schématique, un exemple de réalisation d'une installation de fabrication conforme à l'invention, dans laquelle un système d'élimination d'une farine d'enrobage des boulettes, boudins et / ou palets comprend un transporteur pneumatique ;
- la figure 2 illustre, de manière schématique, un autre exemple de réalisation d'une installation de fabrication conforme à l'invention, dans laquelle un système d'élimination d'une farine d'enrobage des boulettes, boudins et / ou palets comprend un tunnel de pasteurisation ;
- la figure 3 illustre, de manière schématique, un autre exemple de réalisation d'une installation de fabrication conforme à l'invention, dans laquelle un poste de formage des boulettes, boudins et / ou palets comprend un dispositif d'association par co-extrusion d'une composition pâteuse avec une farce, et dans laquelle un système d'élimination d'une farine d'enrobage des boulettes, boudins et / ou palets comprend un tunnel de pasteurisation ;
- la figure 4 illustre, de manière schématique, un autre exemple de réalisation d'une installation de fabrication conforme à l'invention, dans laquelle un système d'élimination d'une farine d'enrobage des boulettes, boudins et / ou palets comprend un transporteur pneumatique et un tunnel de pasteurisation ;
- la figure 5 illustre, de manière schématique, un autre exemple de réalisation d'une installation de fabrication conforme à l'invention, dans laquelle un système d'élimination d'une farine d'enrobage des boulettes, boudins et / ou palets comprend un tunnel de pasteurisation et un moyen vibrant.

### MANIERES DE REALISER L'INVENTION

L'invention concerne un nouveau procédé de fabrication d'un produit alimentaire sous forme de boulettes, boudins et / ou palets B (ou tout autre forme analogue avantageusement massive), lequel produit alimentaire est destiné à être poêlé avant d'être consommé. Il s'agit donc d'un produit alimentaire, avantageusement destiné à l'alimentation humaine, qui n'est pas prévu pour être consommé, mangé, en l'état, mais qui nécessite au contraire une opération préalable de réchauffage ou de cuisson à la poêle (c'est-à-dire d'être poêlé) afin de développer pleinement ses qualités organoleptiques. Bien connue en tant que telle, une telle opération de réchauffage ou de cuisson à la poêle consistera typiquement à réchauffer ou cuire une quantité choisie dudit produit alimentaire sous forme de boulettes, boudins et / ou palets B avec un corps gras (tel que par exemple de l'huile végétale, du beurre ou encore de la margarine) dans une poêle (ou une sauteuse ou tout autre récipient de cuisine adéquat) posée sur une plaque de cuisson classique, à couvert ou à découvert (le terme « poêler » étant avantageusement considéré comme un synonyme du terme « sauter » dans le contexte de l'invention). A l'issue d'une telle opération de réchauffage ou de cuisson à la poêle, le produit alimentaire est alors chaud, d'aspect avantageusement doré, plus ou moins bruni, et prêt à être ingéré en l'état. De préférence, il s'agit d'un procédé de fabrication en continu, qui peut être avantageusement mis en œuvre de manière industrielle, à l'aide d'une installation de fabrication au moins partiellement automatisée.

Le procédé selon l'invention comprend, en premier lieu, une étape de malaxage et de cuisson simultanés d'un mélange formé à partir au moins d'un ou plusieurs ingrédients de base dudit produit alimentaire et d'un liquide pour obtenir une composition pâteuse C, c'est-à-dire une substance molle, malléable, ayant la consistance d'une pâte.

Ledit ingrédient, ou l'un au moins desdits ingrédients, peut avantageusement être à base d'un produit de tubercule de *Solanum tuberosum,* lequel est alors préférentiellement au moins partiellement cuit (en amont de ladite étape de malaxage et de cuisson). Ainsi, ledit produit de tubercule de *Solanum tuberosum* comprend préférentiellement de l'amidon au moins partiellement gélatinisé. Avantageusement, ledit produit de tubercule de *Solanum tuberosum* est formé de flocons (préférentiellement déshydratés) et / ou de poudre et / ou de granules de tubercule de *Solanum tuberosum,* ce qui en facilite le dosage et la mise en œuvre. La mise en œuvre de tubercule de *Solanum tuberosum* permet avantageusement de conférer au produit alimentaire des propriétés organoleptiques particulièrement appréciées par les consommateurs, notamment en termes de texture, de goût et de couleur.

De manière alternative ou complémentaire, ledit ingrédient ou l'un au moins desdits ingrédients peut avantageusement être une farine, une semoule, ou encore une combinaison d'une farine et d'une semoule, d'au moins une céréale. La mise en œuvre alternative ou complémentaire de céréale(s) permet notamment de conférer au produit alimentaire un profil nutritionnel particulier, en particulier sur le plan glycémique. Selon une variante, il peut s'agir d'une céréale (ou d'un mélange de céréales) qui contient des protéines (typiquement des prolamines et des gluténines) capables de former du gluten, afin de conférer en outre à la composition pâteuse C une certaine élasticité, laquelle contribue avantageusement notamment à une bonne tenue du produit alimentaire lors du réchauffage ou de la cuisson, et à l'obtention d'une texture relativement ferme et élastique du produit alimentaire après réchauffage ou cuisson de ce dernier. De préférence, ladite céréale est alors du blé (*Triticum æstivum, Triticum turgidum, Triticum monococcum,* etc.). Ladite farine de céréale est alors typiquement une farine de blé tendre (*Triticum æstivum*)*,* ladite semoule de céréale étant typiquement une farine de blé dur (*Triticum turgidum* subsp. *durum*)*.* Selon une autre variante, plus particulièrement adaptée à l'obtention d'un produit alimentaire destiné notamment à des consommateurs pratiquant l'exclusion d'aliments contenant du gluten, il peut s'agir au contraire d'une céréale (ou d'un mélange de céréales) exempte de protéines capables de former du gluten. Par exemple, il peut s'agir de maïs (*Zea mays* L.), de riz (*Oryza sativa L., Oryza glaberrima,* etc.), de sarrasin (*Fagopyrum esculentum*)*,* etc.

Selon un mode de réalisation particulier, qui permet avantageusement d'obtenir des boulettes, boudins et / ou palets B dont la texture allie idéalement fondant et élasticité, ledit mélange est formé à partir au moins :
- d'un premier ingrédient de base, qui est à base d'un produit de tubercule de *Solanum tuberosum,* dans une proportion préférentiellement comprise entre 10 % à 25 % environ (par exemple environ 18 %) en masse dudit mélange (c'est-à-dire en proportion massique de la masse totale du mélange au début de l'étape de malaxage et de cuisson simultanés), et
- d'un deuxième ingrédient de base, qui est une farine, une semoule, ou encore un mélange d'une farine et d'une semoule, de blé, dans une proportion préférentiellement comprise entre 15 % à 40 % environ (par exemple environ 30 %) en masse dudit mélange.

La teneur dudit mélange en liquide est alors quant à elle préférentiellement comprise entre 40 % à 60 % environ, et plus préférentiellement encore comprise entre 45 % à 55 % environ (par exemple environ 48-49 %) en masse dudit mélange.

Bien évidemment, d'autres ingrédients que ceux précités peuvent être mis en œuvre, que ce soit de manière alternative ou complémentaire, selon notamment les propriétés organoleptiques (texture, couleur, saveur, odeur, etc.) ou encore nutritionnelles que l'on cherche à conférer au produit alimentaire.

Par exemple, de manière alternative ou complémentaire aux ingrédients de base susvisés, le mélange pourra être formé à partir d'un ou plusieurs ingrédients de base :
- à base d'un ou plusieurs autres tubercules par exemple choisi(s) parmi : *Ipomoea batatas, Manihot esculenta* ou encore *Helianthus tuberosus,* et / ou
- à base d'une ou plusieurs autres plantes comestibles par exemple choisie(s) parmi : *Spinacia oleracea, Beta vulgaris L.* subsp. *vulgaris, Daucus carota* subsp. *sativus, Brassica oleracea* L. var. *botrytis* L*., Brassica oleracea var. italica, Pisum sativum* subsp. *sativum var. sativum, Cucurbita pepo, Cucurbita maxima, Cucurbita moschata* ou encore *Cucurbita ficifolia,* et / ou
- à base d'un ou plusieurs produits carnés (porc, volaille, etc.), d'un ou plusieurs produits de la mer ou d'eau douce (poissons, mollusques, crustacés, etc.), d'un ou plusieurs fromages ou spécialités fromagères, etc.

Toujours de manière alternative ou complémentaire aux ingrédients de base susvisés, le mélange pourra être formé à partir d'une ou plusieurs farine(s), semoule(s) ou combinaison d'une farine et d'une semoule :
- d'au moins un légume sec (ou légumineuse, par exemple de l'une ou l'autre des espèces *Lens culinaris, Pisum spp., Cicer arietinum, Phaseolus spp.* ou encore *Vicia faba, Lupinus spp.*)*,* et / ou
- de fruits de *Castanea sativa, Juglans regia* ou encore *Corylus avellana.*

Par ailleurs, ledit mélange pourra contenir un ou plusieurs additifs alimentaires, et / ou un plusieurs arômes alimentaires, et / ou un ou plusieurs colorants alimentaires (par exemple, du curcuma), et / ou un ou plusieurs exhausteurs de goût, et / ou du sel, et / ou de la matière grasse (par exemple une huile végétale, telle que de l'huile de colza par exemple).

Ledit mélange est en revanche préférentiellement dépourvu d'agent levant, c'est-à-dire de substance, de matière ou d'additif alimentaire (naturel(le) ou synthétique) qui permettrait à la composition pâteuse C d'augmenter en volume et de diminuer en densité en dégageant un gaz, par exemple du dioxyde de carbone. Un agent levant (ou agent de levage) se présente habituellement sous la forme d'un agent de fermentation (levain, levure, etc.) ou d'un agent de levage chimique (poudre à lever ou levure chimique, comprenant typiquement un agent basique (par exemple du bicarbonate de sodium), un agent acide (par exemple de l'acide tartrique ou du pyrophosphate de sodium) et un agent stabilisant (par exemple de l'amidon)). Ainsi, la composition pâteuse C est avantageusement obtenue sans levage biologique (et donc sans fermentation) ou chimique.

Le liquide utilisé pour obtenir ladite composition pâteuse C est avantageusement un liquide d'hydratation du mélange, en particulier dans le cas où le ou les ingrédient(s) de base est (sont) initialement sous forme sèche ou à tout le moins insuffisamment humide pour permettre l'obtention d'une composition de consistance pâteuse. De préférence, ledit liquide est de l'eau, mais il pourrait éventuellement être par exemple du lait ou encore un liquide d'origine végétale (jus, infusion, émulsion d'une farine végétale en suspension dans de l'eau, etc.).

Ladite étape de malaxage et de cuisson simultanés consiste donc à malaxer, à pétrir, le mélange formé à partir du ou des ingrédients et dudit liquide, tout en soumettant simultanément ce mélange à un apport de chaleur (ou traitement thermique) pour cuire au moins partiellement ledit mélange et modifier ainsi les propriétés physico-chimiques initiales du ou des ingrédients, pour obtenir de la sorte ladite composition pâteuse C. Le malaxage consiste donc avantageusement à travailler, à pétrir, mécaniquement le mélange en cours de cuisson afin d'en assurer l'homogénéité. Typiquement, selon la nature du ou des ingrédient(s) choisi(s), la cuisson au moins partielle du mélange pourra se traduire par un phénomène de gélatinisation au moins partielle d'amidon et / ou de gluten contenu(s) dans ledit mélange. La mise en œuvre d'une telle étape de malaxage et de cuisson simultanés du mélange permet avantageusement d'obtenir une composition pâteuse C bien homogène et au moins partiellement cuite. Cela permet d'obtenir avantageusement, à partir d'une telle composition pâteuse C, un produit alimentaire qui présente une texture homogène et régulière, et qui pourra être facilement et rapidement réchauffé ou cuit (en cas typiquement de cuisson partielle du mélange) à la poêle en vue de sa consommation.

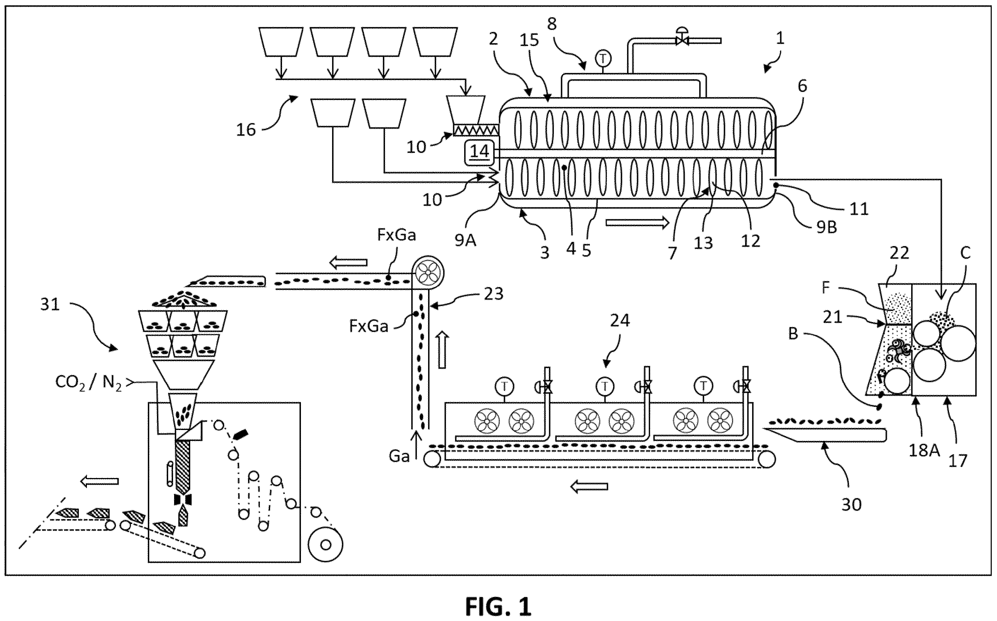

Avantageusement, ladite étape de malaxage et de cuisson peut être réalisée à l'aide d'au moins un malaxeur-cuiseur 2, tel que ce dernier sera décrit plus en détail dans ce suit en lien avec l'installation de fabrication selon l'invention (figures 1 à 5), comprenant un réceptacle 3 définissant une chambre interne 4 pourvue d'une paroi intérieure 5, un arbre 6 monté à rotation au sein de ladite chambre interne 4 et pourvu de moyens de malaxage 7 (tels que des pales ou palettes 12 par exemple), et un moyen de chauffage 8 de ladite paroi intérieure 5. Le ou les ingrédient(s) et le liquide peuvent être introduits au sein de la chambre interne 4 du malaxeur-cuiseur 2 de manière séparée, ou éventuellement déjà mélangés entre eux pour certains au moins. Eventuellement, plusieurs malaxeurs-cuiseurs 2 peuvent être mis en œuvre en parallèle pour augmenter la cadence de préparation de la composition pâteuse C.

Le procédé selon l'invention comprend ensuite une étape de formage de boulettes, boudins et / ou palets B (ou tout autre forme analogue, voire même d'un mélange de formes différentes parmi celles précitées, avantageusement massive) à partir de ladite composition pâteuse C. Par boulettes, boudins et / ou palets B, on entend ici avantageusement, des pièces unitaires qui, outre qu'elles présentent une forme générale au moins partiellement arrondie, sont sensiblement pleines, massives, c'est-à-dire dont la masse occupe tout le volume apparent. Ladite étape de formage consiste donc à mettre en forme la composition pâteuse C obtenue à l'issue de l'étape de malaxage et de cuisson simultanés, pour obtenir un ensemble de boulettes, boudins et / ou palets B de composition pâteuse C, et ce à l'aide de tout dispositif de formage 18A adéquat selon la forme et les dimensions choisies. Par exemple, la composition pâteuse C peut être mise en forme de boulettes B d'un poids unitaire avantageusement compris entre 4 g et 10 g environ, et / ou en forme de boudins (ou bâtonnets) d'une longueur avantageusement comprise entre 6 cm et 10 cm environ, d'un diamètre avantageusement compris entre 6 mm et 15 mm environ et d'un poids unitaire avantageusement compris entre 4 g et 12 g environ, et / ou encore sous la forme de palets d'un diamètre avantageusement compris entre 2 cm et 4 cm environ, d'une épaisseur avantageusement comprise entre 5 mm et 15 mm environ et d'un poids unitaire avantageusement compris entre 4 g et 12 g environ. De manière préférentielle, l'étape de formage est réalisée alors que la composition pâteuse C est encore chaude à l'issue de l'étape de malaxage et de cuisson simultanés, ce qui permet notamment de faciliter la mise en forme de la composition pâteuse C. Typiquement, l'étape de formage est ainsi avantageusement réalisée de manière immédiatement consécutive l'étape de malaxage et de cuisson simultanés.

De manière optionnelle, l'étape de formage des boulettes, boudins et / ou palets B peut comprendre une opération d'association de la composition pâteuse C avec une farce G (ou garniture). De préférence, ladite opération d'association est réalisée par co-extrusion de la composition pâteuse C et de la farce G, ce qui permet d'associer de manière rapide, simple et efficace la composition pâteuse C et la farce G, la composition pâteuse C venant avantageusement envelopper la farce G. On obtient de la sorte des boulettes, boudins et / ou palets B farcis (ou fourrés), et par exemple des boudins cylindriques aux extrémités fermées et d'un poids unitaire avantageusement compris entre 6 g et 12 g environ, farce G incluse. Par exemple, la farce G peut être une préparation comprenant du fromage ou une spécialité fromagère, et / ou une purée de légume(s) et / ou de la viande hachée, etc. Avantageusement, de tels boulettes, boudins et / ou palets B peuvent être formés de 20 % à 50 % en masse de farce G (par exemple, 30 % en masse) et de 50 % à 80 % en masse de composition pâteuse C (par exemple, 70 % en masse). Des proportions différentes peuvent toutefois bien évidemment être mises en œuvre, selon notamment la nature de la composition pâteuse C et / ou de la farce G, ou encore selon le profil organoleptique et / ou nutritionnel recherché du produit alimentaire.

Les plages préférentielles de dimensions et de poids unitaires proposées ci-dessus permettent avantageusement de définir un produit alimentaire bien proportionné, dont la quantité à cuire ou à réchauffer puis à consommer, est facile à doser par le consommateur, et dont la mise en bouche est aisée et digeste sans forcément nécessiter de découpe préalable.

Afin de faciliter l'étape de formage en évitant notamment que les boulettes, boudins et / ou palets B adhèrent notamment au dispositif de formage 18A, et afin d'éviter par ailleurs tout phénomène d'agglomération desdits boulettes, boudins et / ou palets B entre eux au cours de l'étape de formage, qui nuirait à la bonne définition de la forme du produit alimentaire, le procédé selon l'invention comprend en outre une opération de recouvrement (ou opération d'enrobage) d'au moins une partie (et de préférence d'au moins la majorité si non la totalité) d'une surface extérieure desdits boulettes, boudins et / ou palets B par une farine d'enrobage F. Il s'agit avantageusement d'une farine d'enrobage F alimentaire, typiquement obtenue en broyant et en moulant une ou plusieurs céréales et / ou un ou plusieurs autres produits agricoles alimentaires solides. De préférence, ladite farine d'enrobage F est une farine d'au moins une céréale, par exemple une farine de blé tendre, de sorte notamment à ne pas modifier sensiblement le goût propre de la composition pâteuse C. Alternativement, il pourrait par exemple s'agir d'une farine de riz, d'un mélange de farines de riz et de blé tendre, etc.

Si la mise en œuvre d'une telle farine d'enrobage F facilite donc la fabrication du produit alimentaire et l'obtention de boulettes, boudins et / ou palets B qui sont de forme bien définie et qui sont parfaitement bien séparés les uns des autres, il a néanmoins été observé que la présence de farine d'enrobage F à la surface extérieure des boulettes, boudins et / ou palets B est susceptible de présenter un certain nombre d'inconvénients vis-à-vis du consommateur final du produit alimentaire. Tout d'abord, sous l'effet d'une humidité de l'environnement entourant les boulettes, boudins et / ou palets B et / ou sous l'effet d'une humidité propre de ces dernières, les grains de la farine d'enrobage F présente sur la surface des boulettes, boudins et / ou palets B peuvent tendre à s'agglomérer en eux et à gonfler, conférant ainsi auxdits boulettes, boudins et / ou palets B un aspect de surface grumeleux relativement peu esthétique. En outre, lors de la préparation du produit alimentaire à la poêle en vue de sa consommation, la farine d'enrobage F est susceptible d'absorber de manière inappropriée une quantité importante du corps gras utilisé pour réchauffer ou cuire le produit alimentaire, ce qui peut conduire à l'obtention, après réchauffage ou cuisson, d'un produit alimentaire trop chargé en corps gras de cuisson. De plus, la farine d'enrobage F est susceptible de brûler au contact de la poêle chaude, ce qui peut nuire aux qualités organoleptiques du produit alimentaire en termes de couleur, de goût et d'odeur.

C'est la raison pour laquelle le procédé conforme à l'invention comprend, postérieurement à ladite étape de formage, une étape d'élimination de tout ou partie (c'est-à-dire une étape d'élimination au moins partielle, et de préférence d'au moins 50 % en masse) de la farine d'enrobage F présente sur la surface extérieure des boulettes, boudins et / ou palets B (ou étape de défarinage). Qui plus est, il a été observé que, de manière tout à fait intéressante, l'élimination de la farine d'enrobage F permet au produit alimentaire de retrouver une couleur proche de la couleur initiale de la composition pâteuse C. Dans le cas en particulier où le ou l'un au moins des ingrédients de base a été choisi notamment en considération d'une coloration qu'il est intrinsèquement susceptible de conférer à la composition pâteuse C et donc au produit alimentaire, cela permet ainsi avantageusement de limiter, sinon d'éviter totalement, le recours à un colorant alimentaire pour renforcer la couleur des boulettes, boudins et / ou palets B.

De préférence, afin de permettre une élimination particulièrement efficace de la farine d'enrobage F présente à la surface extérieure des boulettes, boudins et / ou palets B, ladite étape d'élimination de la farine d'enrobage F est réalisée par soumission desdits boulettes, boudins et / ou palets B à au moins un flux d'au moins un fluide. En d'autres termes, ladite étape d'élimination de la farine d'enrobage F inclut au moins une opération au cours de laquelle les boulettes, boudins et / ou palets B issus de l'étape de formage sont soumis aux effets d'un ou plusieurs flux d'un ou plusieurs fluides, de manière à entraîner une élimination forcée de tout ou partie (et de préférence d'au moins 50 % en masse) de la farine d'enrobage F présente à la surface extérieure des boulettes, boudins et / ou palets B. En effet, il a été observé que, de manière surprenante, la soumission desdits boulettes, boudins et / ou palets B à au moins un flux d'un fluide s'avère bien plus efficace en matière d'élimination de la farine d'enrobage F que le recours à une opération de passage desdits boulettes, boudins et / ou palets B sur un moyen vibrant 27 (tel que par exemple, un crible vibrant, un tapis ou une bande de transport vibrant(e), etc.).

Ainsi, à l'issue de l'étape d'élimination de la farine d'enrobage F, les boulettes, boudins et / ou palets B présentent un aspect nettement différent (en termes de couleur et d'aspect de surface en particulier) de l'aspect qu'ils présentent initialement en amont de ladite étape d'élimination, dans la mesure où une disparition très sensible, sinon totale, de la farine d'enrobage F peut être observée par comparaison à l'œil nu, sous un éclairage en lumière visible. Typiquement, lorsque la composition pâteuse C présente une couleur jaune par exemple et que la farine d'enrobage F est de couleur blanche par exemple, les boulettes, boudins et / ou palets B recouverts de farine d'enrobage F peuvent alors apparaître sensiblement blancs ou jaune pâle à l'issue de l'étape de formage (selon la quantité de farine d'enrobage déposée). A l'issue de l'étape d'élimination de la farine d'enrobage F, les boulettes, boudins et / ou palets B sont débarrassés en tout ou partie de leur farine d'enrobage et présentent donc une couleur avantageusement plus jaune, c'est-à-dire plus proche de la couleur intrinsèque de la composition pâteuse C.

Selon une première variante, ledit fluide utilisé au cours de l'étape d'élimination de la farine d'enrobage F est un gaz Ga ou mélange de gaz Ga (flux gazeux FxGa), et de préférence de l'air. Alternativement, il pourrait s'agir d'un autre gaz Ga ou mélange de gaz Ga que de l'air, et par exemple un gaz Ga ou mélange de gaz Ga rares (par exemple du diazote N₂), bien que ça soit potentiellement plus coûteux et complexe à mettre en œuvre.

Selon un mode de réalisation (non illustré) de cette variante, le flux gazeux FxGa est un flux de soufflage, dirigé en direction des boulettes, boudins et / ou palets B. Les caractéristiques du flux gazeux FxGa, et de préférence d'air, en termes de profil géométrique, de débit, de pression ou encore de vitesse, peuvent être avantageusement régulées, définies selon les dimensions boulettes, boudins et / ou palets B, leur quantité, ainsi que selon la quantité de farine d'enrobage présente sur leur surface extérieure. Selon ce mode de réalisation, les boulettes, boudins et / ou palets B sont ainsi avantageusement soumise par au moins un flux de soufflage, dont le frottement contre la surface extérieure des boulettes, boudins et / ou palets B provoque avantageusement l'élimination de tout ou partie de la farine d'enrobage F. Au cours de l'étape d'élimination de la farine d'enrobage F, les boulettes, boudins et / ou palets B peuvent être déplacés, par exemple sur un convoyeur, tandis qu'ils sont soumis aux effets dudit flux de soufflage, de préférence selon une direction de déplacement orthogonale à une direction de soufflage dudit flux de soufflage.

Selon un autre mode de réalisation de cette première variante, retenue dans l'exemple de la figure 1, le flux gazeux FxGa est un flux d'aspiration. Là encore, les caractéristiques du flux gazeux, et de préférence d'air, en termes de profil géométrique, de débit, de pression ou encore de vitesse peuvent être avantageusement régulées, définies selon les dimensions des boulettes, boudins et / ou palets B, leur quantité, ainsi que selon la quantité de farine d'enrobage F présente sur leur surface extérieure.

De manière particulièrement préférentielle, comme dans l'exemple illustré à la figure 1, ledit flux de gaz ou de mélange de gaz FxGa est un flux d'aspiration auquel lesdits boulettes, boudins et / ou palets B sont soumis au sein d'un transporteur pneumatique 23. Typiquement, un transporteur pneumatique est un dispositif de convoyage qui utilise le déplacement d'un gaz Ga ou d'un mélange de gaz Ga, et en particulier d'air, à l'intérieur d'une canalisation pour le transport de produits pulvérulents ou granulaires sous un effet d'aspiration de ces derniers au sein de ladite canalisation. L'étape d'élimination de la farine d'enrobage F consiste donc, dans ce cas de figure particulièrement avantageux, à aspirer et transporter les boulettes, boudins et / ou palets B au sein d'un transporteur pneumatique 23, par l'intermédiaire donc d'une canalisation que comprend ce dernier. De manière surprenante, il s'avère qu'une telle manière de mettre en œuvre l'étape d'élimination de la farine d'enrobage F s'avère particulièrement efficace, dans la mesure où l'élimination de la farine d'enrobage F peut être avantageusement provoquée non seulement par le frottement du flux gazeux FxGa d'aspiration contre la surface extérieure des boulettes, boudins et / ou palets B, mais également par un frottement des boulettes, boudins et / ou palets B contre une paroi intérieure de la canalisation du transporteur pneumatique 23 et / ou par un frottement des boulettes, boudins et / ou palets B les uns contre les autres lors de leur déplacement au sein dudit transporteur pneumatique 23.

Outre les caractéristiques déjà évoquées du flux gazeux FxGa d'aspiration en termes de profil géométrique, de débit, de pression ou encore de vitesse, la longueur de transport des boulettes, boudins et / ou palets B au sein du transporteur pneumatique 23 peut également être régulée, choisie, selon les dimensions des boulettes, boudins et / ou palets B, leur quantité, ainsi que selon la quantité de farine d'enrobage F présente sur leur surface extérieure afin d'optimiser l'élimination de la farine d'enrobage F. En effet, l'allongement de la longueur de transport tend à augmenter la quantité de farine d'enrobage F éliminée. Le recours à un transporteur pneumatique 23 pour éliminer la farine d'enrobage F est particulièrement bien adapté à une mise en œuvre dans un contexte de fabrication industrielle, puisqu'il permet en outre de déplacer de manière rapide, sûre et hygiénique lesdits boulettes, boudins et / ou palets B d'un point à un autre de l'espace au sein duquel est fabriqué le produit alimentaire. Enfin, la farine d'enrobage F ainsi éliminée peut avantageusement rester confinée au sein du transporteur pneumatique, ce qui contribue à la propreté et à la sécurité (vis-à-vis notamment du risque d'explosion d'une atmosphère chargée en farine) du procédé, et être collectée par exemple afin d'être réutilisée pour l'étape de formage d'autres boulettes, boudins et / ou palets B.

Bien évidemment, d'autres configurations de flux d'aspiration pourront être alternativement envisagées, et par exemple une configuration similaire - au sens du gazeux FxGa près - à celle envisagée ci-avant s'agissant de la mise en œuvre d'un flux gazeux FxGa de soufflage. Néanmoins, la mise en œuvre d'un transporteur pneumatique 23, comme décrit ci-dessus, reste plus avantageuse, tant en termes d'efficacité d'élimination de la farine d'enrobage F qu'en termes de praticité de mise en œuvre, en particulier dans un environnement de fabrication industrielle.

Il a été observé que la température des boulettes, boudins et / ou palets B est un paramètre qui peut influer sur l'efficacité de l'élimination de la farine d'enrobage F par soumission à un flux gazeux FxGa. En particulier, l'élimination de la farine apparaît alors optimisée lorsque lesdits boulettes, boudins et / ou palets B sont préférentiellement soumis audit flux de gaz ou de mélange de gaz FxGa (flux de soufflage ou flux d'aspiration) alors que lesdits boulettes, boudins et / ou palets B sont à une température moyenne inférieure ou égale à 50 °C. Il est toutefois avantageux que la température des boulettes, boudins et / ou palets B ne soit pas trop faible, afin d'éviter un éventuel phénomène de condensation d'eau à la surface extérieure des boulettes, boudins et / ou palets B. Ainsi, de manière particulièrement préférentielle, lesdits boulettes, boudins et / ou palets B sont soumis audit flux de gaz ou de mélange de gaz FxGa alors qu'ils sont à une température moyenne sensiblement comprise entre 2 °C et 15 °C. En outre, le maintien des boulettes, boudins et / ou palets B à une température moyenne comprise dans les plages de valeurs préférentielles indiquées ci-dessus confère avantageusement auxdits boulettes, boudins et / ou palets B une rigidité suffisante pour éviter une déformation plastique de ces derniers sous les effets du flux gazeux FxGa. A ce titre, le procédé de fabrication peut avantageusement comprendre, entre l'étape de malaxage et de cuisson et l'étape d'élimination de la farine d'enrobage F, et de préférence plus précisément entre l'étape de formage des boulettes, boudins et / ou palets B et l'étape d'élimination de la farine d'enrobage F, une étape de refroidissement (forcé ou non) des boulettes, boudins et / ou palets B pour amener ces derniers à une température moyenne comprise dans les plages de températures préférentielles évoquées ci-dessus. La température dudit flux de gaz ou de mélange de gaz FxGa (flux de soufflage ou flux d'aspiration) peut être quant à elle avantageusement comprise entre 1 °C et 30 °C, et de préférence comprise entre 2 °C et 20 °C.

Selon une deuxième variante, ledit fluide utilisé au cours de l'étape de d'élimination de la farine d'enrobage F est un liquide Li (flux liquide FxLi). Ledit liquide Li peut être formé d'un liquide unique ou d'un mélange de plusieurs liquides différents, le ou les liquides étant avantageusement alimentaire(s). De préférence, ledit liquide Li est de l'eau, afin notamment de faciliter la mise en œuvre du procédé et d'éviter notamment de modifier le goût des boulettes, boudins et / ou palets B de composition pâteuse C. Bien évidemment, mais de manière moins avantageuse, il pourrait toutefois alternativement s'agir d'un autre liquide ou mélange de liquides que de l'eau (une huile végétale, par exemple). Les caractéristiques du flux liquide FxLi, et de préférence d'eau, en terme de profil géométrique, de débit, de pression ou encore de vitesse, peuvent être avantageusement régulées, définies selon les dimensions des boulettes, boudins et / ou palets B, leur quantité, ainsi que selon la quantité de farine d'enrobage F présente sur leur surface extérieure. Selon cette deuxième variante, la farine d'enrobage F est avantageusement éliminée par frottement du flux liquide FxLi contre la surface extérieure des boulettes, boudins et / ou palets B, le flux liquide FxLi venant laver au moins partiellement ladite surface extérieure.

Selon un mode de réalisation préférentiel de cette deuxième variante, ledit flux de liquide FxLi est un flux de gouttelettes d'eau. En d'autres termes, il s'agit donc de soumettre lesdits boulettes, boudins et / ou palets B à un douchage par un ou plusieurs jets de gouttelettes d'eau projetées en direction de la surface extérieure desdits boulettes, boudins et / ou palets B, de préférence sous la forme d'un brouillard d'eau. Au cours de l'étape d'élimination de la farine d'enrobage, les boulettes, boudins et / ou palets B peuvent alors être déplacés, par exemple sur un convoyeur 25, tandis qu'ils sont soumis aux effets dudit flux liquide FxLi de gouttelettes d'eau, de préférence selon une direction de déplacement orthogonale à une direction de projection dudit flux liquide FxLi. De préférence, ledit convoyeur 25 est ajouré et les boulettes, boudins et / ou palets B sont soumis à des jets de gouttelettes d'eau de sens opposés, de manière à optimiser le traitement de la surface extérieure des boulettes, boudins et / ou palets B par lesdites gouttelettes d'eau.

De manière préférentielle, ledit flux liquide FxLi est un flux de gouttelettes d'eau chaude, et / ou éventuellement de vapeur d'eau, c'est-à-dire d'eau à une température supérieure à la température ambiante de l'environnement de fabrication, typiquement comprise entre 15° C et 35 °C), pour optimiser encore l'efficacité de l'étape d'élimination de la farine d'enrobage F. Plus avantageusement encore, ledit flux de gouttelettes d'eau chaude est à une température sensiblement comprise entre 50 °C et 100 °C, de préférence comprise entre 60°C et 99 °C (et par exemple compris entre 70 °C et 95 °C), lesdits boulettes, boudins et / ou palets B étant soumis audit flux de gouttelettes d'eau chaude pendant un temps de traitement sensiblement compris entre 1 min et 10 min, de préférence compris entre 1 min et 8 min, et de préférence encore compris entre 2 min et 6 min. L'efficacité de l'étape d'élimination de la farine d'enrobage F dans de telles conditions de température et de temps de traitement semble s'expliquer, outre que par des phénomènes de frottement et de lavage tels que déjà évoqués ci-avant, par un phénomène de transformation physico-chimique de la farine d'enrobage F. En particulier, lorsque cette dernière contient de l'amidon, voire des protéines capables de former du gluten, la soumission des boulettes, boudins et / ou palets B à un tel flux de gouttelettes d'eau chaude est susceptible de provoquer une hydratation des grains de la farine d'enrobage F et une gélatinisation totale ou partielle de l'amidon et / du gluten, qui tend à faire éclater les grains de la farine d'enrobage F. Il en résulte une disparition de la farine d'enrobage F, en tant que telle, par transformation cette dernière. Eventuellement, les phénomènes de frottement, de lavage et transformation pouvant être simultanés, les grains de farine d'enrobage F ainsi transformée peuvent être détachés de la surface extérieure des boulettes, boudins et / ou palets B et emportés par le flux liquide FxLi.

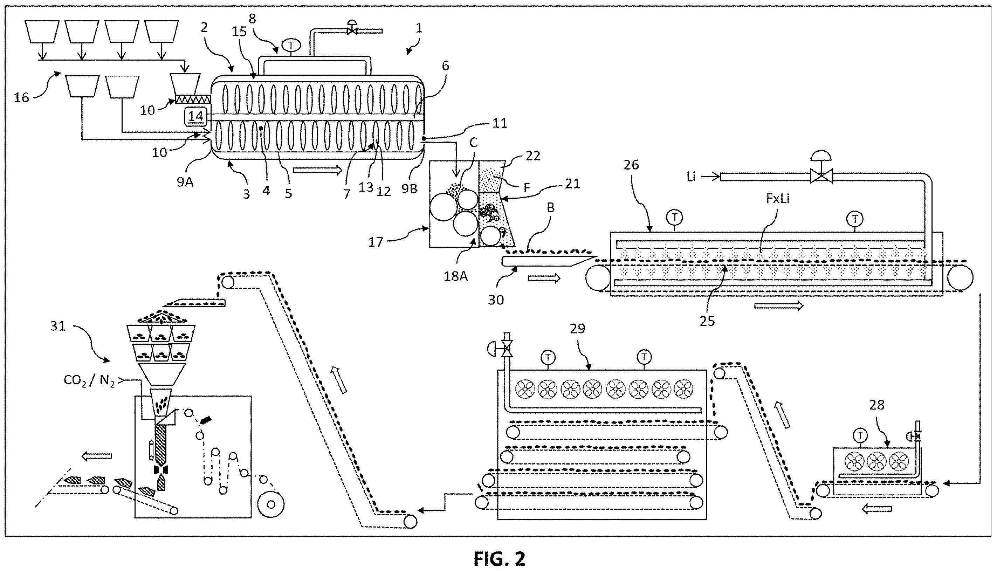

De manière particulièrement préférentielle, comme dans l'exemple illustré à la figure 2 notamment, le flux liquide FxLi est un flux de gouttelettes d'eau chaude auquel lesdits boulettes, boudins et / ou palets B sont soumis au sein d'un tunnel de pasteurisation 26 (ou tunnel de débactérisation thermocontrôlée), et ce avantageusement dans les conditions préférentielles de températures et de temps de traitement évoquées ci-dessus. A l'aide d'un tel tunnel de pasteurisation 26, connu en tant que tel et comprenant typiquement des buses de projection de gouttelettes d'eau chaude, il est ainsi avantageusement possible, en une seule et même étape, d'éliminer de manière particulièrement efficace la farine d'enrobage F présente sur la surface extérieure des boulettes, boudins et / ou palets B, tout en réduisant simultanément une éventuelle charge microbiologique desdits boulettes, boudins et / ou palets B par débactérisation thermocontrôlée. Cela permet ainsi d'allonger la durée de conservation du produit alimentaire avant son réchauffage ou sa cuisson par le consommateur, en garantissant la qualité microbiologique du produit alimentaire, et ce en particulier dans le cas où les boulettes, boudins et / ou palets B contiennent une farce G, comme envisagé précédemment.

Il a été par ailleurs observé que la température des boulettes, boudins et / ou palets B est un paramètre qui peut influer sur l'efficacité de l'élimination de la farine d'enrobage F par soumission à un flux liquide. En particulier, l'élimination de la farine d'enrobage F apparaît optimisée lorsque lesdits boulettes, boudins et / ou palets B sont préférentiellement soumis audit flux de liquide FxLi alors que lesdits boulettes, boudins et / ou palets B sont à une température moyenne supérieure à la température ambiante (de l'environnement de fabrication, typiquement comprise entre 15° C et 35 °C), de préférence comprise entre 30 °C et 95 °C. Par exemple, lorsque les boulettes, boudins et / ou palets B sont de constitution homogène, c'est-à-dire uniquement constitués de composition pâteuse C, les boulettes, boudins et / ou palets B peuvent être avantageusement soumis audit flux de liquide FxLi alors qu'ils sont à une température moyenne comprise entre 60 °C et 95 °C. Lorsque les boulettes, boudins et / ou palets B sont de constitution hétérogène, et par exemple fourrés d'une farce G, les boulettes, boudins et / ou palets B peuvent être avantageusement soumis audit flux de liquide FxLi alors qu'ils sont à une température moyenne comprise entre 30 °C et 60 °C.

Une telle étape d'élimination de la farine d'enrobage F par soumission des boulettes, boudins et / ou palets B à un flux liquide FxLi pourrait bien évidemment, quoique de manière moins avantageuse, être réalisée d'une manière différente de celle exposée ci-dessus. Ceci étant, il n'en reste pas moins préférable (bien qu'envisageable) que la soumission des boulettes, boudins et / ou palets B à un flux liquide FxLi ne consiste pas en une immersion complète (et à plus forte raison, prolongée) des boulettes, boudins et / ou palets B dans un bain de liquide, afin d'éviter que les boulettes, boudins et / ou palets B se gorgent de liquide et gonflent, ce qui pourraient s'avérer préjudiciable pour les qualités organoleptiques finales du produit alimentaire.

Il est à noter en outre que le recours à un flux liquide FxLi contribue par ailleurs à la propreté et à la sécurité (vis-à-vis notamment du risque d'explosion d'une atmosphère chargée en farine) du procédé, dans la mesure où on évite ainsi une dispersion de farine d'enrobage F pulvérulente dans l'environnement de production. Par ailleurs, les variantes « par flux gazeux » FxGa et « par flux liquide » FxLi décrites ci-avant ne sont pas nécessairement exclusives l'une de l'autre, dans la mesure où l'étape d'élimination de tout ou partie de ladite farine d'enrobage F pourrait avantageusement comprendre au moins une première opération de soumission desdits boulettes, boudins et / ou palets B à au moins un flux d'un premier fluide, par exemple gazeux, et une deuxième opération de soumission desdits boulettes, boudins et / ou palets B à au moins un flux d'un deuxième fluide, différents dudit premier fluide et par exemple liquide. Les avantages des deux variantes pourraient ainsi être avantageusement combinés, et l'élimination de la farine d'enrobage F être encore améliorée. Par exemple, il est envisageable que l'étape d'élimination de la farine d'enrobage F puisse être ainsi réalisée :
- soit dans un premier temps par soumission des boulettes, boudins et / ou palets B à un premier flux gazeux FxGa (par exemple au sein d'un transporteur pneumatique 23), puis dans un deuxième temps par soumission des boulettes, boudins et / ou palets B à un deuxième flux liquide FxLi (par exemple, dans un tunnel de pasteurisation 26) ;
- soit inversement dans un premier temps par soumission des boulettes, boudins et / ou palets B à un premier flux liquide FxLi (par exemple, dans un tunnel de pasteurisation 26), puis dans un deuxième temps par soumission des boulettes, boudins et / ou palets B à un deuxième flux gazeux FxGa (par exemple au sein d'un transporteur pneumatique 23).

Par ailleurs, si le recours à un flux de fluide, gazeux FxGa ou liquide FxLi, s'avère particulièrement efficace pour éliminer la farine d'enrobage F présente à la surface extérieure des boulettes, boudins et / ou palets B, il reste pour autant parfaitement envisageable que l'étape d'élimination de la farine d'enrobage F comprenne, de manière complémentaire, une ou plusieurs opération(s) de passage desdits boulettes, boudins et / ou palets B sur un ou plusieurs moyens vibrants 27 (tel que par exemple, un crible vibrant, un tapis ou une bande de transport vibrant(e), etc.).

Afin de garantir une conservation optimale du produit alimentaire sur de longues périodes, en particulier lorsque lesdits boulettes, boudins et / ou palets B n'ont pas subi de débactérisation thermocontrôlée comme évoquée ci-avant, le procédé de fabrication du produit alimentaire peut avantageusement comprendre, postérieurement à l'étape d'élimination de la farine d'enrobage F :
- une étape de séchage desdits boulettes, boudins et / ou palets B, de préférence en continu, pour porter l'humidité relative de ces derniers à une valeur préférentiellement comprise entre une humidité relative sensiblement comprise entre 40 % et 60 % environ, de préférence comprise entre 45 % et 55 % environ. Une telle étape de séchage peut être avantageusement réalisée par soumission des boulettes, boudins et / ou palets B à un flux forcé d'air chaud ; et / ou
- une étape de refroidissement desdits boulettes, boudins et / ou palets B, de préférence en continu, pour porter ces derniers à une température moyenne sensiblement comprise entre 2 °C et 15 °C.

De préférence, le procédé de fabrication comprend, entre l'étape de formage et l'étape d'élimination de la farine d'enrobage F, une opération de calibrage des boulettes, boudins et / ou palets B, par exemple à l'aide d'une plaque vibrante pourvue de trous de dimensions variables selon une direction de déplacement des boulettes, boudins et / ou palets B le long de ladite plaque. En tant que telle, l'opération de calibrage n'appartient pas à l'étape d'élimination de la farine d'enrobage F, dans la mesure où sa mise en œuvre n'a qu'un impact très limité, sinon nul, sur la farine d'enrobage F présente sur la surface extérieure des boulettes, boudins et / ou palets B.

Avantageusement, le procédé de fabrication du produit alimentaire comprend, postérieurement à l'étape d'élimination de la farine d'enrobage F et, le cas échéant, postérieurement à ladite étape de séchage et / ou à ladite étape de refroidissement desdits boulettes, boudins et / ou palets B, une étape de conditionnement du produit alimentaire sous la forme d'une quantité choisie de boulettes, boudins et / ou palets B. Ledit produit alimentaire peut être ainsi conditionné en sachet ou en barquette par exemple, et de préférence sous atmosphère contrôlée ou modifiée (par exemple sous une atmosphère par un mélange de 30 % à 70 % de dioxyde de carbone CO₂ et de 30 % à 70 % de diazote N₂).

L'invention concerne également, en tant que telle, une installation de fabrication d'un produit alimentaire sous forme de boulettes, boudins et / ou palets B, destiné à être poêlé avant d'être consommé, tel que celui-ci a été défini ci-avant en lien avec la description du procédé selon l'invention. D'une manière générale, il s'agit avantageusement d'une installation permettant de mettre en œuvre le procédé de fabrication conforme à l'invention, de sorte que les éléments de la description faite ci-dessus du procédé selon l'invention restent valables et applicables, *mutatis mutandis,* à l'installation conforme à l'invention, et réciproquement. Ladite installation est préférentiellement conçue et configurée pour permettre une fabrication du produit alimentaire en continu. Il s'agit avantageusement d'une installation industrielle, au moins partiellement automatisée. Différents exemples de réalisation de l'installation selon l'invention sont illustrés en de manière schématique aux figures 1 à 5.

L'installation conforme à l'invention comprend un poste de malaxage et de cuisson simultanés 1 d'un mélange formé à partir d'un ou plusieurs ingrédients de base dudit produit alimentaire et d'un liquide pour obtenir une composition pâteuse C. Ledit poste de malaxage et de cuisson simultanés 1 est avantageusement conçu et configuré pour permettre la mise en œuvre de l'étape de malaxage et de cuisson simultanés du procédé de fabrication conforme à l'invention. De préférence, ledit poste de malaxage et de cuisson simultanés 1 inclut au moins un malaxeur-cuiseur 2, lequel comprenant un réceptacle 3 définissant une chambre interne 4 pourvue d'une paroi intérieure 5, un arbre 6 monté à rotation au sein de ladite chambre interne 4 et pourvu de moyens de malaxage 7, et un moyen de chauffage 8 de ladite paroi intérieure 5. De manière plus préférentielle encore, il s'agit d'un malaxeur-cuiseur 2 conçu et configuré pour malaxer et cuire en continu ledit mélange en son sein. La chambre interne 4 est de forme avantageusement cylindrique à base circulaire et s'étend typiquement entre une première extrémité 9A, au niveau de laquelle sont agencés un ou plusieurs dispositifs d'introduction 10 du ou des ingrédients et du liquide au sein de la chambre interne 4, et une deuxième extrémité 9B opposée, au niveau de laquelle la chambre interne 4 est pourvue d'une ouverture de sortie 11 de la composition pâteuse C. L'arbre 6 du malaxeur-cuiseur 2 est typiquement monté à rotation au sein de ladite chambre interne 4 selon un axe de rotation sensiblement parallèle à une direction d'extension longitudinale moyenne de la chambre interne 4. Les moyens de malaxage 7 dont est pourvu l'arbre 6 sont avantageusement formés de pales 12 (ou palettes) distinctes et distantes, qui s'étendent chacune à partir de l'arbre 6 de manière sensiblement radiale à l'axe de rotation de ce dernier, et dont une extrémité distale 13 est agencée à distance de la paroi intérieure 5 de la chambre interne 4 (typiquement une distance de quelques millimètres, par exemple 5 mm environ). L'arbre 6 est avantageusement commandé à rotation par un moteur électrique 14, à une vitesse suffisante pour provoquer une centrifugation du mélange et la formation, contre la paroi intérieure 5 chauffée de la chambre interne 4, d'une couche mince, continue et turbulente dudit mélange. Les pales 12 sont avantageusement agencées et orientée relativement à l'arbre 6 de manière à assurer une progression du mélange en cours de malaxage et de cuisson de la première extrémité 9A vers la deuxième extrémité 9B de la chambre interne 4. Le moyen de chauffage 8 de la paroi intérieure 5 de la chambre interne 4 comprend avantageusement une enveloppe de chauffe 15, qui entoure la chambre interne 4 sur sensiblement toute la longueur et toute la circonférence de cette dernière, et à l'intérieur de laquelle circule un fluide caloporteur (eau chaude, vapeur d'eau, huile diathermique, etc.). Avantageusement, le poste de malaxage et de cuisson simultanés 1 comprend, agencés en amont du ou des dispositifs d'introduction 10 du ou des ingrédients et du liquide au sein de la chambre interne 4, un ou plusieurs dispositifs de dosage 16 du ou des ingrédients de base et du liquide. Le ou les dispositifs de dosage 16 et le ou les dispositifs d'introduction 10 du ou des ingrédients et du liquide peuvent être de tous types connus adaptés à la nature de ces derniers.

Un tel malaxeur-cuiseur 2 permet avantageusement, avec un encombrement relativement réduit, l'obtention rapide et en continu d'une composition pâteuse C particulièrement bien homogène et au moins partiellement cuite. Cela permet d'obtenir avantageusement, à partir d'une telle composition pâteuse C, un produit alimentaire qui présente une texture homogène et régulière, et qui pourra être facilement et rapidement réchauffé ou cuit (en cas typiquement de cuisson partielle du mélange) à la poêle en vue de sa consommation. Bien évidemment, un poste de malaxage et de cuisson simultanés 1 de conception et configuration différentes pourra toutefois être alternativement envisagé sans pour autant sortir du cadre de l'invention. Avantageusement, ledit poste de malaxage et de cuisson simultanés 1 inclut une pluralité de malaxeurs-cuiseurs 2, qui sont alors avantageusement agencés en parallèle, afin d'atteindre une cadence plus élevée de préparation de la composition pâteuse C sans pour autant dégrader la qualité du malaxage et de la cuisson du mélange (aux figures, un seul malaxeur-cuiseur 2 est illustré afin uniquement de ne pas surcharger visuellement les illustrations schématiques proposées).

L'installation conforme à l'invention comprend également un poste de formage 17 de boulettes, boudins et / ou palets B, à partir de la composition pâteuse C obtenue à l'aide dudit poste de malaxage et de cuisson simultanés 1. Ledit poste de formage 17 est avantageusement conçu et configuré pour mettre en œuvre l'étape de formage précédemment décrite du procédé de fabrication conforme à l'invention. Agencé en aval du poste de malaxage et de cuisson simultanés 1, ledit poste de formage 17 comprend typiquement un ou plusieurs dispositifs de formage 18A, de tous types connus et adaptés à l'obtention, à partir de la composition pâteuse C, de boulettes, boudins et / ou palets B de formes et dimensions choisies. Par exemple, le ou les dispositifs de formage 18A peuvent être conçus et configurés pour extruder la composition pâteuse C sous la forme d'un cylindre continu de composition pâteuse C d'un diamètre choisi, découper ledit cylindre de composition pâteuse C en tronçons de longueur choisie, puis éventuellement mouler les tronçons de composition pâteuse C ainsi obtenus pour leur conférer une forme finale prédéfinie de boulettes, boudins et / ou palets B. Par exemple, le dispositif de formage 18A peut comprendre des rouleaux sur lesquels la composition pâteuse C est écrasée, et des buses à travers lesquelles la composition pâteuse C est ensuite poussée, extrudée. Agencés en sortie des buses, des couteaux rotatifs peuvent être prévus pour découper la composition pâteuse C en boulettes B et pour rabattre ces dernières sur un rouleau strié ou une grille à barreaux parallèles, afin de marquer les boulettes B de stries décoratives.

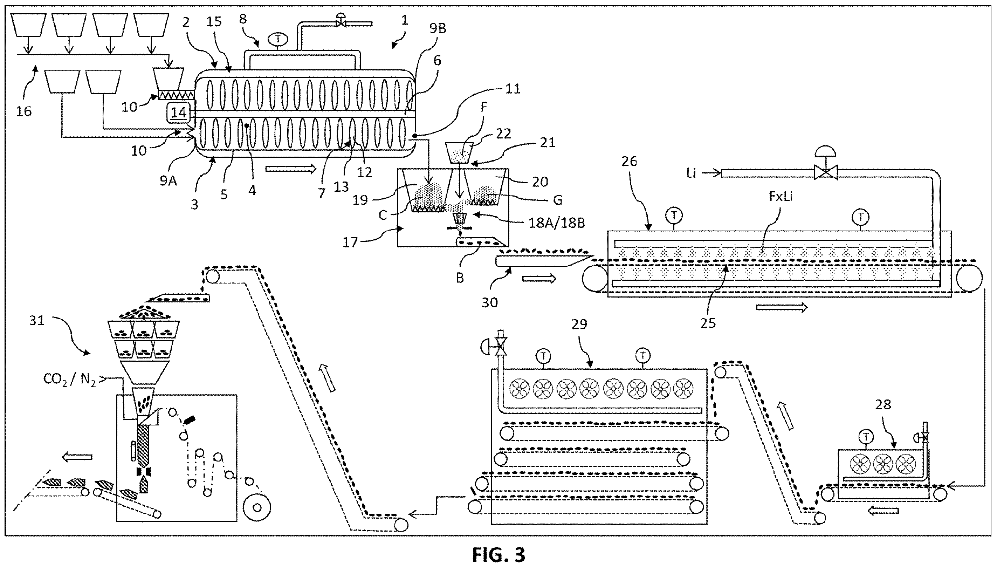

De manière optionnelle, et comme illustré en exemple à la figure 3 ledit poste de formage 17 des boulettes, boudins et / ou palets B comprend un dispositif d'association 18B de ladite composition pâteuse C avec une farce G (ou garniture), de manière à former ainsi des boulettes, boudins et / ou palets B farcis (ou fourrés), comme expliqué précédemment en lien avec le procédé conforme à l'invention. De préférence, le dispositif d'association 18B est conçu et configuré pour associer de la composition pâteuse C et la farce G par co-extrusion de ces dernières. Dans ce cas, le dispositif d'association 18B est avantageusement confondu avec, ou intégré dans, le ou les dispositifs de formage 18A, et peut par exemple comprendre une série de buses primaires, à travers lesquelles la composition pâteuse C est poussée en sortie d'un réservoir 19 de composition pâteuse C, et une série de buses secondaires, chacune agencée centrée à l'intérieur d'une buse primaire et alimentée en farce G à partir, par exemple, d'un réservoir 20 de farce G. Un diaphragme, dont l'ouverture et la fermeture sont commandées à une cadence prédéfinie, peut être avantageusement prévu pour couper et refermer un tube de composition pâteuse C pourvu d'un cœur de farce G sortant des buses, pour former ainsi des boulettes, boudins et / ou palets B farcis. De préférence, le poste de formage 17 est conçu et configuré pour former lesdits boulettes, boudins et / ou palets B à chaud, et plus particulièrement encore alors que la composition pâteuse C est encore chaude en sortie du poste de malaxage et de cuisson simultanés 1, ce qui permet notamment de faciliter la mise en forme de la composition pâteuse C. Avantageusement, le poste de formage 17 est alors agencé immédiatement en aval du poste de malaxage et de cuisson simultanés 1, de sorte qu'il n'est ainsi pas nécessaire de recourir à un quelconque moyen de réchauffage de la composition pâteuse C en amont du poste de formage 17.

Conformément à l'invention, le poste de formage 17 comprend un dispositif de recouvrement 21 d'au moins une partie d'une surface extérieure desdits boulettes, boudins et / ou palets B par une farine d'enrobage F. Ledit dispositif de recouvrement 21 est avantageusement conçu et configuré pour mettre en œuvre l'opération de recouvrement d'au moins une partie (et de préférence d'au moins la majorité si non la totalité) de la surface extérieure desdits boulettes, boudins et / ou palets B par une farine d'enrobage F précédemment décrite du procédé de fabrication conforme à l'invention. Typiquement, le dispositif de recouvrement 21 comprend un réservoir 22 de farine d'enrobage F, et il est conçu et configuré par exemple pour saupoudrer de farine d'enrobage F, de préférence en continu, la surface extérieure des boulettes, boudins et / ou palets B en cours de formage, ainsi que préférentiellement tout ou partie des surfaces du ou des dispositifs de formage 18A et / ou du dispositif de d'association 18B en contact avec la composition pâteuse C des boulettes, boudins et / ou palets B.

En outre, l'installation conforme à l'invention comprend, pour les raisons et avantages précédemment exposés en lien avec le procédé selon l'invention, un système d'élimination de tout ou partie (et de préférence d'au moins 50 % en masse) de ladite farine d'enrobage F présente sur ladite surface extérieure desdits boulettes, boudins et / ou palets B. Agencé en aval du poste de formage 17, ledit système d'élimination est avantageusement conçu et configuré pour mettre en œuvre l'étape d'élimination ladite farine d'enrobage F, telle que décrite ci-avant, du procédé de fabrication conforme à l'invention.

Pour les effets et avantages techniques déjà explicités précédemment s'agissant dudit procédé, ledit système d'élimination de la farine d'enrobage F est préférentiellement conçu et configuré pour éliminer la farine d'enrobage F par soumission desdits boulettes, boudins et / ou palets B à au moins un flux d'au moins un fluide Ga, Li. Bien évidemment, l'invention n'est pas pour autant limitée à de telles conception et configuration préférentielles particulières du système d'élimination de la farine d'enrobage F. Les variantes décrites ci-après de ces conception et configuration préférentielles du système d'élimination de la farine d'enrobage F sont avantageusement respectivement destinées à la mise en œuvre des variantes correspondantes, exposées ci-avant, de l'étape d'élimination de ladite farine d'enrobage F du procédé selon l'invention. Ainsi, le système d'élimination de la farine d'enrobage F pourra avantageusement comprendre tout ou partie des différents moyens techniques (ainsi que leurs effets et avantages respectifs) décrits en lien ladite étape d'élimination de ladite farine d'enrobage F et ses variantes. Pour des raisons de concision, ces moyens, effets et avantages techniques ne seront donc pas nécessairement décrits à nouveau dans ce qui suit.

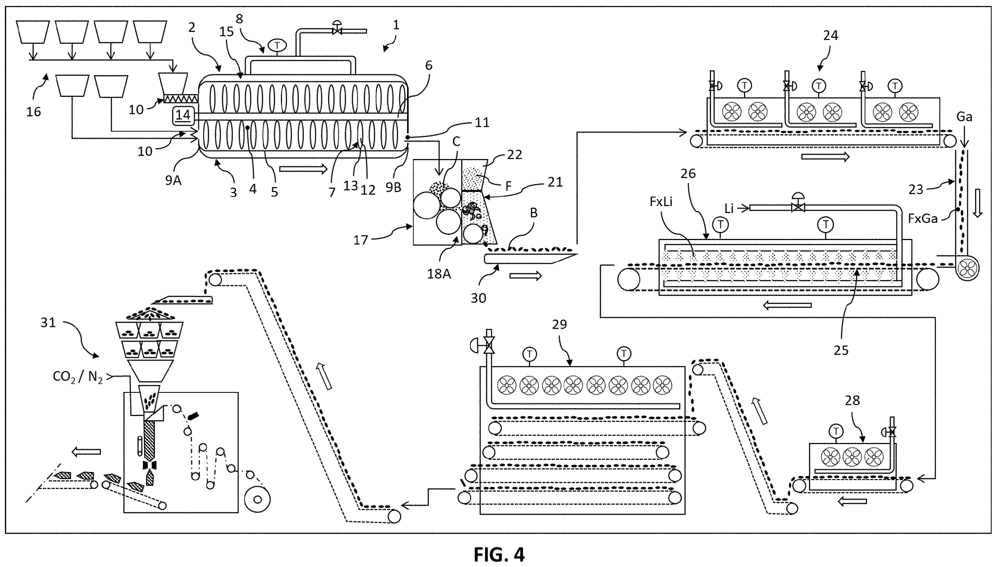

Selon une première variante, le système d'élimination de la farine d'enrobage F est avantageusement conçu et configuré pour soumettre les boulettes, boudins et / ou palets F à au moins un flux d'au moins un fluide Ga, Li qui est un gaz Ga ou mélange de gaz Ga (flux gazeux FxGa), et de préférence de l'air. Selon un mode de réalisation (non illustré) de cette première variante, le flux gazeux FxGa est un flux de soufflage, le flux gazeux FxGa étant dirigé en direction des boulettes, boudins et / ou palets B. Le système d'élimination de la farine d'enrobage F peut alors avantageusement comprendre, outre des buses de soufflage dudit flux gazeux FxGa en direction des boulettes, boudins et / ou palets B, un convoyeur (ou tout autre moyen connu adéquat) pour déplacer les boulettes, boudins et / ou palets B tandis qu'ils sont soumis aux effets dudit flux de soufflage, de préférence selon une direction de déplacement orthogonale à une direction de soufflage dudit flux de soufflage. Selon un autre mode de réalisation plus préférentiel de cette première variante, retenue dans l'exemple de la figure 1, le flux de gaz ou de mélange de gaz FxGa est un flux d'aspiration. De manière particulièrement préférentielle, comme dans les exemples illustrés aux figures 1 et 4, le système d'élimination de la farine d'enrobage F comprend à ce titre un transporteur pneumatique 23, conforme à la description qui en a été faite ci-avant s'agissant du procédé, pour soumettre au sein dudit transporteur pneumatique 23, lesdits boulettes, boudins et / ou palets B audit flux d'aspiration. Bien évidemment, mais néanmoins de manière moins avantageuse, d'autres moyens techniques connus adéquats pourront être envisagés pour soumettre les boulettes, boudins et / ou palets B à un flux gazeux de type flux d'aspiration.

De préférence, l'installation de fabrication du produit alimentaire est conçue et configurée de manière que ledit système d'élimination de la farine d'enrobage F soumette lesdits boulettes, boudins et / ou palets B audit flux de gaz ou de mélange de gaz FxGa alors que lesdits boulettes, boudins et / ou palets B sont à une température moyenne inférieure ou égale à 50 °C, et de préférence sensiblement comprise entre 2 °C et 15 °C, pour les différents avantages déjà exposés en matière d'efficacité de l'élimination de la farine d'enrobage F. A ce titre, l'installation de fabrication peut avantageusement comprendre, entre le poste de malaxage et de cuisson simultanés 1 et le système d'élimination de la farine d'enrobage F, et de préférence plus précisément entre le poste de formage 17 des boulettes, boudins et / ou palets B et le système d'élimination de la farine d'enrobage F, un (premier) poste de refroidissement 24 (forcé ou non) des boulettes, boudins et / ou palets B pour amener ces derniers à une température moyenne comprise dans les plages de températures préférentielles évoquées ci-dessus (figures 1et 4). De préférence, le système d'élimination est conçu et configuré de sorte que la température dudit flux de gaz ou de mélange de gaz FxGa (flux de soufflage ou flux d'aspiration) est quant à elle avantageusement comprise entre 1 °C et 30 °C, et de préférence comprise entre 2 °C et 20 °C. De tout type connu adéquat, ledit poste de refroidissement 24 (ou refroidisseur) peut, par exemple, être avantageusement conçu et configuré pour soumettre, de préférence en continu, les boulettes, boudins et / ou palets B à un flux forcé d'air froid. Alternativement, mais de manière moins avantageuse, le poste de refroidissement 24 pourrait consister par exemple en un dispositif de stockage temporaire des boulettes, boudins et / ou palets B à température ambiante, dans le cas où la température moyenne recherchée reste supérieure ou égale à la température ambiante.

Selon une deuxième variante, le système d'élimination de la farine d'enrobage F est avantageusement conçu et configuré pour soumettre les boulettes, boudins et / ou palets B à au moins un flux d'au moins un fluide Ga, Li qui est un liquide Li (flux liquide FxLi). Ledit liquide Li peut être formé d'un liquide unique ou d'un mélange de plusieurs liquides différents, le ou les liquides étant avantageusement alimentaire(s). De préférence, ledit liquide Li est de l'eau.

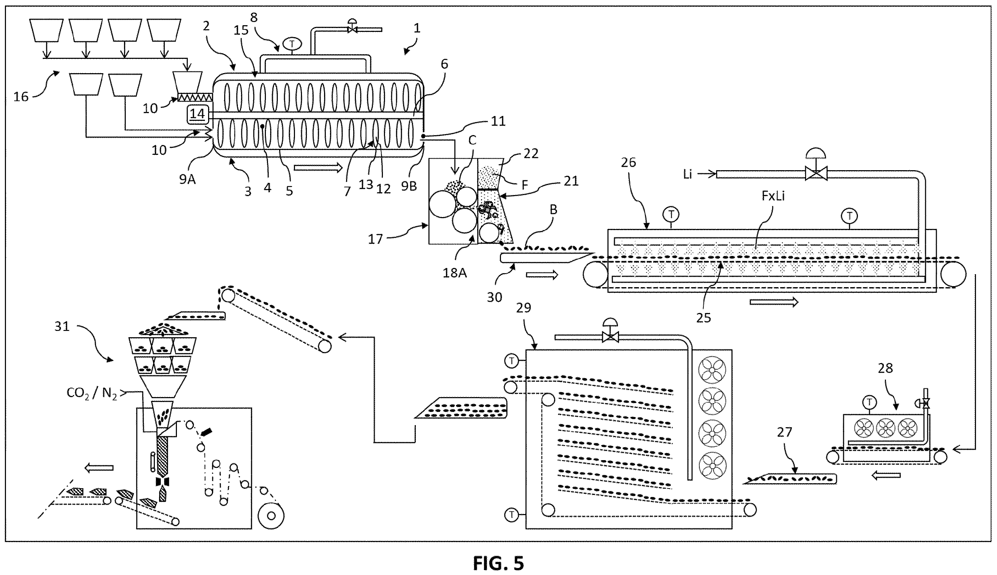

Selon un mode de réalisation préférentiel de cette deuxième variante, ledit flux de liquide FxLi est un flux de gouttelettes d'eau. Le système d'élimination est alors conçu et configuré pour soumettre lesdits boulettes, boudins et / ou palets B à un douchage par un ou plusieurs jets de gouttelettes d'eau projetées en direction de la surface extérieure desdits boulettes, boudins et / ou palets B, de préférence sous la forme d'un brouillard d'eau (figures 2 et 5 notamment). Le système d'élimination peut avantageusement comprendre une ou plusieurs buses de projection de gouttelettes d'eau, ainsi qu'un convoyeur 25 (ou tout autre moyen technique connu adéquat) pour déplacer les boulettes, boudins et / ou palets B en regard des buses de projection, de préférence selon une direction de déplacement orthogonale à une direction de projection dudit flux liquide par lesdites buses de projection. De préférence, un tel convoyeur 25 sera alors ajouré, et au moins deux buses de projections seront agencées respectivement de part et d'autre de ce dernier afin de soumettre les boulettes, boudins et / ou palets à des jets de gouttelettes d'eau de sens opposés (figures 2 et 5 notamment). De manière préférentielle, le système d'élimination est alors conçu et configuré de sorte que ledit flux liquide FxLi est un flux de gouttelettes d'eau chaude, et / ou éventuellement de vapeur d'eau, c'est-à-dire d'eau à une température supérieure à la température ambiante de l'environnement de fabrication, typiquement comprise entre 15° C et 35 °C. Plus avantageusement encore, le système d'élimination est conçu et configuré pour soumettre lesdits boulettes, boudins et / ou palets B audit flux de gouttelettes d'eau chaude dont la température est sensiblement comprise entre 50 °C et 100 °C, et de préférence comprise entre 60 °C et 99 °C (par exemple comprise entre 70 °C et 95 °C), pendant un temps de traitement sensiblement compris entre 1 min et 10 min, de préférence compris entre 1 min et 8 min, et de préférence encore compris entre 2 min et 6 min.

De manière particulièrement préférentielle, comme dans les exemples illustrés aux figure 2 à 5, le système d'élimination de la farine d'enrobage F comprend un tunnel de pasteurisation 26 pour soumettre au sein de ce dernier lesdits boulettes, boudins et / ou palets B audit flux de gouttelettes d'eau chaude, et ce avantageusement dans les conditions préférentielles de température et de temps de traitement évoquées ci-dessus. Connu en tant que tel, un tel tunnel de pasteurisation 26 comprend typiquement des buses de projection de gouttelettes d'eau chaude, de préférence sous la forme d'un brouillard, et un convoyeur 25 pour déplacer et faire circuler lesdits boulettes, boudins et / ou palets B à l'intérieur du tunnel de pasteurisation 26, en regard des buses de projection, à une vitesse prédéfinie pour atteindre le temps de traitement choisi.

Pour optimiser encore l'efficacité de l'élimination de la farine d'enrobage, l'installation de fabrication est préférentiellement conçue et configurée de manière que le système d'élimination de la farine d'enrobage F soumette lesdits boulettes, boudins et / ou palets B audit flux de liquide FxLi (et de préférence audit fluide de gouttelettes d'eau chaude) alors que lesdits boulettes, boudins et / ou palets B sont à une température moyenne supérieure à la température ambiante (de l'environnement de fabrication, typiquement comprise entre 15° C et 35 °C), de préférence comprise entre 30 °C et 95 °C (et par exemple comprise entre 60 °C et 95 °C pour des boulettes, boudins et / ou palets B de constitution homogène, et par exemple comprise entre 30 °C et 60 °C pour des boulettes, boudins et / ou palets B de constitution hétérogène, comme expliqué en lien avec le procédé). Pour ce faire, le système d'élimination de la farine d'enrobage F peut être avantageusement positionné au plus près du poste de malaxage et de cuisson simultanés 1 et du poste de formage 17, et l'installation peut être dépourvue de poste de refroidissement des boulettes, boudins et / ou palets B entre le système d'élimination et lesdits poste de malaxage et de cuisson simultanés 1 et poste de formage 17, de sorte que les boulettes, boudins et / ou palets B sortants du poste de formage 17 arrivent au niveau du système d'élimination alors qu'ils sont encore chauds. Il n'est ainsi pas nécessaire de prévoir la mise en œuvre d'un quelconque moyen de réchauffage des boulettes, boudins et / ou palets B en amont du système d'élimination de la farine d'enrobage F. Cela simplifie la conception et la mise en œuvre de l'installation, et en limite l'encombrement.

Bien évidemment, un tel système d'élimination de la farine d'enrobage F par soumission des boulettes, boudins et / ou palets B à un flux liquide FxLi pourrait bien évidemment, quoique de manière moins avantageuse, être de conception et configuration différentes de celles exposées ci-dessus. Ceci étant, il n'en reste pas moins préférable (bien qu'envisageable), pour les raisons déjà exposées en lien avec le procédé de fabrication, que le système d'élimination de la farine d'enrobage F soit dépourvu de dispositif d'immersion complète (et à plus forte raison, prolongée) des boulettes, boudins et / ou palets B dans un bain de liquide.

Par ailleurs, conformément à ce qui a été précisé en lien avec le procédé de fabrication, les variantes « par flux gazeux » FxGa et « par flux liquide » FxLi décrites ci-avant ne sont pas nécessairement exclusives l'une de l'autre, dans la mesure où le système d'élimination de tout ou partie de ladite farine d'enrobage F pourrait avantageusement comprendre au moins un premier dispositif de soumission desdits boulettes, boudins et / ou palets B à au moins un flux d'un premier fluide, par exemple gazeux, et un deuxième dispositif de soumission desdits boulettes, boudins et / ou palets B à au moins un flux d'un deuxième fluide, différents dudit premier fluide et par exemple liquide. Par exemple, il est envisageable que le système d'élimination de la farine d'enrobage puisse ainsi comprendre :
- soit un (premier) dispositif de soumission desdits boulettes, boudins et / ou palets B à un premier flux gazeux (transporteur pneumatique 23, par exemple), et un (deuxième) dispositif de soumission desdits boulettes, boudins et / ou palets B à un deuxième flux liquide (tunnel de pasteurisation 26, par exemple), agencé en aval dudit premier dispositif (comme illustré en exemple à la figure 4) ;
- soit inversement un (premier) dispositif de soumission desdits boulettes, boudins et / ou palets à un premier flux liquide (tunnel de pasteurisation 26, par exemple), et un (deuxième) dispositif de soumission desdits boulettes, boudins et / ou palets à un deuxième flux gazeux (transporteur pneumatique 23, par exemple), agencé en aval dudit premier dispositif (non illustré).

Par ailleurs, si le recours à un flux de fluide, gazeux FxGa ou liquide FxLi, s'avère particulièrement efficace pour éliminer la farine d'enrobage F présente à la surface extérieure des boulettes, boudins et / ou palets B, il reste pour autant parfaitement envisageable que le système d'élimination de la farine d'enrobage F comprenne, de manière complémentaire, un ou plusieurs moyens vibrants 27 (tel que par exemple, un crible vibrant, un tapis ou une bande de transport vibrant(e), etc.) contribuant mécaniquement à l'élimination de ladite farine d'enrobage F (figure 5).

Afin de garantir une conservation optimale du produit alimentaire sur de longues périodes, en particulier lorsque lesdits boulettes, boudins et / ou palets B n'ont pas subi de débactérisation thermocontrôlée comme évoquée ci-avant, l'installation de fabrication du produit alimentaire peut avantageusement comprendre, de préférence en aval du système d'élimination de la farine d'enrobage F :
- un poste de séchage 28 desdits boulettes, boudins et / ou palets B, conçu et configuré pour porter l'humidité relative de ces derniers à une valeur préférentiellement comprise entre une humidité relative sensiblement comprise entre 40 % et 60 % environ, de préférence comprise entre 45 % et 55 % environ (figures 2 à 5). De tout type connu adéquat, ledit poste de séchage 28 (ou sécheur) peut, par exemple, être avantageusement conçu et configuré pour soumettre, de préférence en continu, les boulettes, boudins et / ou palets B à un flux forcé d'air chaud ; et / ou
- un poste de refroidissement 29 (ou deuxième poste de refroidissement 29, le cas échéant) desdits boulettes, boudins et / ou palets B, conçu et configuré pour porter ces derniers à une température moyenne sensiblement comprise entre 2 °C et 15 °C. De tout type connu adéquat, et par exemple à étages horizontaux (figures 2 à 4) ou en spirale (figure 5), ledit poste de refroidissement 29 (ou refroidisseur) peut, par exemple, être avantageusement conçu et configuré pour soumettre, de préférence en continu, les boulettes, boudins et / ou palets B à un flux forcé d'air froid.

De préférence, l'installation de fabrication comprend, entre le poste de formage 17 et le système d'élimination de la farine d'enrobage F, un dispositif de calibrage 30 des boulettes, boudins et / ou palets B, par exemple à l'aide d'une plaque vibrante pourvue de trous de dimensions variables selon une direction de déplacement des boulettes, boudins et / ou palets B le long de ladite plaque. En tant que tel, le dispositif de calibrage 30 n'appartient pas au système d'élimination de la farine d'enrobage F, dans la mesure où son fonctionnement n'a qu'un impact très limité, sinon nul, sur la farine d'enrobage F présente sur la surface extérieure des boulettes, boudins et / ou palets B.

Avantageusement, l'installation de fabrication du produit alimentaire comprend, en aval du système d'élimination de la farine d'enrobage F et, le cas échéant, en aval du poste de séchage 28 et / ou à du (deuxième) poste de refroidissement 29 desdits boulettes, boudins et / ou palets B, un poste de conditionnement 31 du produit alimentaire sous la forme d'une quantité choisie de boulettes, boudins et / ou palets B. Ledit poste de conditionnement 31 peut être avantageusement conçu et configuré pour conditionner ledit produit alimentaire en sachet ou en barquette par exemple, et de préférence sous atmosphère contrôlée ou modifiée (par exemple sous une atmosphère formée par un mélange de 30 % à 70 % de dioxyde de carbone CO₂ et de 30 % à 70 % de diazote N₂). Il est à noter que les termes « amont » et « aval » sont employés dans la description de l'invention ci-dessus pour traduire un enchaînement chronologique des différentes étapes et opérations du procédé de fabrication (le terme « *amont* » signifiant « *antérieurement »,* le terme « *aval »* signifiant *« postérieurement »),* et sont donc symétriquement à considérer en lien avec le sens de progression (indiqué par des flèches aux figures) de la composition pâteuse C et des boulettes, boudins et / ou palets B au sein de l'installation de fabrication du produit alimentaire.

En définitive, il ressort de ce qui précède que le nouveau procédé et la nouvelle installation de fabrication conformes à l'invention permettent l'obtention d'un produit alimentaire sous forme de boulettes, de boudins ou encore de palets B qui, non seulement peut être simplement et rapidement cuit ou réchauffé à la poêle par un consommateur dépourvu de compétences culinaires particulières, mais présente en outre des propriétés organoleptiques améliorées, tant avant qu'après cuisson ou réchauffage. Le nouveau procédé et une nouvelle installation de fabrication proposés sont avantageusement de conception et de mise en œuvre relativement simples. Ils permettent la fabrication dudit produit alimentaire à cadence élevée, en particulier dans un contexte industriel, et qui plus est à coûts maîtrisés, et avec l'encombrement matériel particulièrement bien maîtrisé. Par ailleurs, le nouveau procédé et la nouvelle installation proposés permettent avantageusement la fabrication d'un produit alimentaire qui conserve longtemps d'excellentes qualités, tant organoleptiques que bactériologiques, avant sa cuisson ou son réchauffage.

### POSSIBILITE D'APPLICATION INDUSTRIELLE

L'invention trouve son application dans la conception de procédés et installations de fabrication de produits alimentaires sous forme de boulettes, de boudins et / ou encore de palets, et plus spécifiquement d'un produit alimentaire destiné à être réchauffé ou cuit avant d'être consommé, ainsi que dans le domaine de la fabrication de tels produits alimentaires.

## Revendications

1. Procédé de fabrication d'un produit alimentaire sous forme de boulettes, boudins et / ou palets (B), destiné à être poêlé avant d'être consommé, comprenant
- une étape de malaxage et de cuisson simultanés d'un mélange formé à partir d'un ou plusieurs ingrédients de base dudit produit alimentaire et d'un liquide pour obtenir une composition pâteuse (C),
- une étape de formage de boulettes, boudins et / ou palets (B) à partir de ladite composition pâteuse (C), ladite étape de formage comprenant une opération de recouvrement d'au moins une partie d'une surface extérieure desdits boulettes, boudins et / ou palets (B) par une farine d'enrobage (F), puis
- une étape d'élimination de tout ou partie de ladite farine d'enrobage (F) présente sur ladite surface extérieure desdits boulettes, boudins et / ou palets (B).

2. Procédé selon la revendication précédente, dans lequel ladite étape d'élimination de la farine d'enrobage (F) est réalisée par soumission desdits boulettes, boudins et / ou palets (B) à au moins un flux (FxGa, FxLi) d'au moins un fluide (Ga, Li).

3. Procédé selon la revendication précédente, dans lequel au moins un fluide est un gaz (Ga) ou un mélange de gaz (Ga), et de préférence de l'air.

4. Procédé selon la revendication précédente, dans lequel le flux de gaz ou de mélange de gaz (FxGa) est un flux d'aspiration, auquel lesdits boulettes, boudins et / ou palets (B) sont préférentiellement soumis au sein d'un transporteur pneumatique (23).

5. Procédé selon l'une quelconque des revendications 3 ou 4, dans lequel lesdits boulettes, boudins et / ou palets (B) sont soumis audit flux de gaz ou de mélange de gaz (FxGa) alors que lesdits boulettes, boudins et / ou palets (B) sont à une température moyenne inférieure ou égale à 50 °C, et de préférence sensiblement comprise entre 2 °C et 15 °C.

6. Procédé selon l'une quelconque des revendications 2 à 5, dans lequel au moins un fluide est un liquide (Li), et de préférence de l'eau.

7. Procédé selon la revendication précédente, dans lequel le flux de liquide (FxLi) est un flux de gouttelettes d'eau chaude, auquel lesdits boulettes, boudins et / ou palets (B) sont préférentiellement soumis au sein d'un tunnel de pasteurisation (26).

8. Procédé selon la revendication précédente, dans lequel ledit flux de gouttelettes d'eau chaude est à une température sensiblement comprise entre 50 °C et 100 °C, de préférence comprise entre 60 °C et 99 °C, lesdits boulettes, boudins et / ou palets (B) étant soumis audit flux de gouttelettes d'eau chaude pendant un temps de traitement sensiblement compris entre 1 min et 10 min, et de préférence compris entre 2 min et 6 min.

9. Procédé selon l'une quelconque des revendications 6 à 8, dans lequel lesdits boulettes, boudins et / ou palets (B) sont soumis au flux de liquide (FxLi) alors qu'ils sont à une température moyenne supérieure à la température ambiante, et de préférence comprise entre 30 °C et 95 °C.

10. Installation de fabrication d'un produit alimentaire sous forme de boulettes, boudins et / ou palets (B), destiné à être poêlé avant d'être consommé, comprenant
- un poste de malaxage et de cuisson simultanés (1) d'un mélange formé à partir d'un ou plusieurs ingrédients de base dudit produit alimentaire et d'un liquide pour obtenir une composition pâteuse (C),
- un poste de formage (17) de boulettes, boudins et / ou palets (B) à partir de ladite composition pâteuse (C), ledit poste de formage (17) comprenant un dispositif de recouvrement (21) d'au moins une partie d'une surface extérieure desdits boulettes, boudins et / ou palets (B) par une farine d'enrobage (F), et
- un système d'élimination de tout ou partie de ladite farine d'enrobage (F) présente sur ladite surface extérieure desdits boulettes, boudins et / ou palets (B).

11. Installation selon la revendication précédente, dans laquelle ledit système d'élimination de la farine d'enrobage (F) est conçu et configuré pour éliminer la farine d'enrobage (F) par soumission desdits boulettes, boudins et / ou palets (B) à au moins un flux (FxGa, FxLi) d'au moins un fluide (Ga, Li).

12. Installation selon la revendication précédente, dans laquelle au moins un fluide est un gaz (Ga) ou un mélange de gaz (Ga), et de préférence de l'air.

13. Installation selon la revendication précédente, dans lequel ledit flux de gaz ou de mélange de gaz (FxGa) est un flux d'aspiration, ledit système d'élimination de la farine d'enrobage (F) comprenant de préférence un transporteur pneumatique (23) pour soumettre au sein de ce dernier lesdits boulettes, boudins et / ou palets (B) audit flux d'aspiration.

14. Installation selon l'une quelconque des revendications 11 à 13, dans laquelle au moins un fluide est un liquide (Li), et de préférence de l'eau.

15. Installation selon la revendication précédente, dans lequel ledit flux de liquide (FxLi) est un flux de gouttelettes d'eau chaude, ledit système d'élimination de la farine d'enrobage (F) comprenant de préférence un tunnel de pasteurisation (26) pour soumettre au sein de ce dernier lesdits boulettes, boudins et / ou palets (B) audit flux de gouttelettes d'eau chaude.
